# EUROPÄISCHE PATENTSCHRIFT

(11) **EP 2 981 418 B1**
(45) Veröffentlichungstag und Bekanntmachung des Hinweises auf die Patenterteilung: **12.06.2019**
(21) Anmeldenummer: 14715846.3
(22) Anmeldetag: 04.04.2014
(51) Int. Cl.: G02B 5/18, B42D 25/351, B42D 25/364, B42D 25/373, B42D 25/355, B42D 25/324, B42D 25/328, G02B 27/06

(54) **SICHERHEITSFADEN ODER FENSTERELEMENT FÜR EINEN WERTGEGENSTAND UND HERSTELLVERFAHREN DAFÜR**
SECURITY THREAD OR WINDOW ELEMENT FOR A VALUABLE ARTICLE AND PRODUCTION METHOD THEREFOR
FIL DE SÉCURITÉ OU ÉLÉMENT FENÊTRE POUR UN OBJET DE VALEUR ET PROCÉDÉ DE FABRICATION ASSOCIÉ

(30) Priorität: 05.04.2013 DE 102013005938
(43) Veröffentlichungstag der Anmeldung: 10.02.2016
(73) Patentinhaber: Giesecke+Devrient Currency Technology GmbH, 81677 München (DE)
(72) Erfinder: HOFFMÜLLER, Winfried, 83646 Bad Tölz (DE); LOCHBIHLER, Hans, 80337 München (DE); PFEIFFER, Matthias, 81675 München (DE)
(86) Internationale Anmeldenummer: PCT/EP2014/000911
(87) Internationale Veröffentlichungsnummer: WO 2014/161673

(56) Entgegenhaltungen:
- EP-A1- 2 505 377
- JP-A- 2009 086 648
- US-A1- 2010 026 450

## Beschreibung

Die Erfindung betrifft einen Sicherheitsfaden oder ein Fensterelement für einen Wertgegenstand, der/ das einen mehrschichtigen Körper mit einer Vorderseite und einer Rückseite hat, der aufweist: eine transparente, geprägte Schicht, in deren Oberfläche eine Mikrostruktur eingeprägt ist, eine Metallisierung, die mindestens auf Teilen der Oberfläche der geprägten Schicht aufgebracht ist, eine auf die Oberfläche und über die Metallisierung aufgebrachte, transparente Deckschicht, welche die Mikrostruktur egalisiert, und eine über der Deckschicht aufgebrachte, erste cholesterische Flüssigkristallschicht.

Die Erfindung bezieht sich weiter auf ein Verfahren zur Herstellung eines Sicherheitsfadens oder Fensterelements für einen Wertgegenstand, wobei ein mehrschichtiger Körper mit einer Vorderseite und einer Rückseite hergestellt wird und dazu folgende Schritte ausgeführt werden: eine transparente Schicht wird bereitgestellt und in deren Oberfläche eine Mikrostruktur eingeprägt, mindestens auf Teile der Oberfläche der geprägten Schicht wird eine Metallisierung aufgebracht, auf die Oberfläche und über die Metallisierung wird eine transparente Deckschicht, welche die Mikrostruktur egalisiert, aufgebracht, und über der Deckschicht wird eine erste cholesterische Flüssigkristallschicht aufgebracht.

Fensterelemente oder Sicherheitsfäden werden verwendet, um Wertgegenstände, beispielsweise Banknoten, vor Fälschung zu schützen. Sie stehen hier für Sicherheitselemente, die von zwei Seiten einen Kopierschutzeffekt darbieten. An sie wird die Anforderung gestellt, dass sie zum einen flächig ausgebildet sind und zum anderen von beiden Seiten einen optischen Effekt darbieten, der schlecht nachgeahmt oder durch Kopieren reproduziert werden kann. Sicherheitsfäden werden beispielsweise in Banknotenpapieren als sogenannte "Pendelfäden" eingearbeitet, die abwechselnd auf der Vorderseite und der Rückseite des Banknotenpapiers erscheinen.

Für Sicherheitselemente ist es bekannt, regelmäßige oder unregelmäßige Strukturen zu verwenden, die Abmessungen im Wellenlängenbereich des Lichtes haben. Weisen solche Strukturen eine metallisierte Oberfläche auf, erscheinen sie einem Betrachter aus nahezu allen Blickwinkeln tiefschwarz. Im Stand der Technik werden solche Strukturen aufgrund ihrer Abmessungen im Sub-Wellenlängenbereich als Sub-Wellenlängenstrukturen oder auch als Nanostrukturen bezeichnet. Anknüpfend an entsprechende Strukturen von Mottenaugen nennt man sie auch Mottenaugenstrukturen.

Aus der DE 10 2011 121 588 sind Mikrokavitätenstrukturen bekannt, mit denen Bilder erzeugt werden. Die Strukturen bestehen aus einer Vielzahl metallisierter Mikrokavitäten mit Aperturweiten von etwa 1 µm bis 2 µm und einem Aspektverhältnis (Verhältnis von Strukturtiefe zu Aperturweite) von 0,5 oder größer. Sie haben eine deutliche Lichtabsorption im sichtbaren Bereich und erscheinen im Vergleich zu glatten, metallisierten Oberflächen dunkel. Sie werden deshalb im Stand der Technik zur Erzeugung von Motiven vorgeschlagen.

Im Stand der Technik sind cholesterische Flüssigkristallschichten bekannt, die zum Erzeugen eines Farbeffektes bei Sicherheitselementen vorgeschlagen werden. Die EP 2505377 A1 ordnet eine solche cholesterische Flüssigkristallschicht über einer Reflexschicht an, welche teilweise eine Sub-Wellenlängenstruktur aufweist und damit einen dunklen Hintergrund für die cholesterisehe Flüssigkristallschicht bereitstellt. Der dunkle Hintergrund bewirkt einen besonders gut wahrnehmbaren Farbeffekt.

Der Erfindung liegt vor diesem Stand der Technik die Aufgabe zugrunde, ein Sicherheitselement zu schaffen, das als Fensterelement oder Sicherheitsfaden ausgebildet ist.

Die Erfindung schafft einen solchen Sicherheitsfaden oder Fensterelement für einen Wertgegenstand, der/ das einen mehrschichtigen Körper mit einer Vorderseite und einer Rückseite hat, der aufweist: eine transparente, geprägte Schicht, in deren Oberfläche eine Mikrostruktur eingeprägt ist, eine Metallisierung, die mindestens auf Teilen der Oberfläche der geprägten Schicht aufgebracht ist, eine auf die Oberfläche und über die Metallisierung aufgebrachte, transparente Deckschicht, welche die Mikrostruktur egalisiert, eine über der Deckschicht aufgebrachte, erste Flüssigkristallschicht, wobei die Mikrostruktur entweder eine Sub-Wellenlängenstruktur ist oder Mikrokavitäten, aufweisend eine Aperturweite von 0,5 µm bis 3 µm und ein Aspektverhältnis von 0,5 und größer, umfasst und so ausgebildet ist, dass sie sowohl von der Vorderseite als auch von der Rückseite her mindestens abschnittsweise lichtabsorbierend ist, und unter der geprägten Schicht eine zweite Flüssigkristallschicht vorgesehen ist.

Die Erfindung sieht weiter vor ein Verfahren zur Herstellung eines Sicherheitsfadens oder Fensterelements für einen Wertgegenstand, wobei ein mehrschichtiger Körper mit einer Vorderseite und einer Rückseite hergestellt wird und dazu folgende Schritte ausgeführt werden: eine transparente Schicht wird bereitgestellt und in deren Oberfläche eine Mikrostruktur eingeprägt, mindestens auf Teile der Oberfläche der geprägten Schicht wird eine Metallisierung aufgebracht, auf die Oberfläche und über die Metallisierung wird eine transparente Deckschicht, welche die Mikrostruktur egalisiert, aufgebracht, über der Deckschicht wird eine erste Flüssigkristallschicht aufgebracht, wobei die Mikrostruktur entweder als Sub-Wellenlängenstruktur oder Mikrokavitäten, aufweisend eine Aperturweite von 0,5 µm bis 3 µm und ein Aspektverhältnis von 0,5 und größer, ausgebildet und so gestaltet wird, dass sie sowohl von der Vorderseite als auch von der Rückseite her mindestens abschnittsweise lichtabsorbierend ist, und unter der geprägten Schicht wird eine zweite Flüssigkristallschicht vorgesehen.

Erfindungsgemäß wird also das Konzept der EP 2505377 A1 weitergebildet, so dass ein Sicherheitsfaden oder Fensterelement für einen Wertgegenstand erhalten wird. Der Sicherheitsfaden oder das Fensterelement weist zwischen zwei transparenten Schichten eine eingeprägte Mikrostruktur auf, die mindestens teilweise metallisiert ist. Die Mikrostruktur ist entweder als Sub-Wellenlängenstruktur ausgebildet oder mit Mikrokavitäten, letztere aufweisend eine Aperturweite von 0,5 µm bis 3 µm und ein Aspektverhältnis von 0,5 und größer, versehen. Die Sub-Wellenlängenstruktur oder die Mikrokavitäten sind so ausgebildet, dass sie sowohl von der Vorderseite als auch von der Rückseite des Sicherheitsfadens bzw. Fensterelementes mindestens abschnittsweise lichtabsorbierend sind. Auf beiden Seiten der derart erhaltenen transparenten Schichtstruktur befinden sich cholesterische Flüssigkristallschichten. Da die Mikrostruktur von beiden Seiten mindestens abschnittsweise lichtabsorbierend ist, befinden sich beide cholesterische Flüssigkristallschichten mindestens abschnittsweise vor einem dunklen Hintergrund.

Vor einem solchen dunklen Hintergrund entfalten sie einen besonders gut wahrnehmbaren Farbeffekt, der darin begründet ist, dass die Flüssigkristallschicht blickwinkelabhängig Strahlung aus einem Wellenlängenbereich reflektiert und das restliche Spektrum transmittiert. Wird die transmittierte Strahlung aufgrund eines lichtabsorbierenden Hintergrunds, welchen die Mikrostruktur mindestens abschnittsweise bereitstellt, geschluckt, verbleibt nur die reflektierte Strahlung, die einen bunten Farbeindruck hervorruft. Vor einem reflektierenden Hintergrund hingegen wäre der Farbeindruck schwach bis gar nicht wahrnehmbar, da auch der transmittierte Strahlbereich zum Betrachter zurückgeworfen würde, so dass die spektral abhängige Reflexion der Flüssigkristallschicht nicht oder so gut wie nicht sichtbar wäre.

Ferner erlaubt eine geprägte absorbierende Struktur gegenüber einem gedruckten schwarzen Untergrund die Ausgestaltung von hochaufgelösten Motiven.

Es ist für die Erfindung also nicht nur wesentlich, dass die Flüssigkristallschicht auf beiden Seiten, d. h. auf Vorder- wie auf Rückseite des mehrschichtigen Körpers, welcher den Sicherheitsfaden oder das Fensterelement bildet, vorgesehen ist, es ist auch erforderlich, dass die Mikrostruktur mindestens abschnittsweise auf beiden Seiten lichtabsorbierend ist. Dabei ist es jedoch nicht erforderlich, dass die von der Vorderseite lichtabsorbierenden Abschnitte zusammenfallen mit den von der Rückseite absorbierenden Abschnitten. Vielmehr ist es durchaus zulässig, dass Lichtabsorption von der Vorderseite in der Mikrostruktur an einer anderen Stelle stattfindet, als von der Rückseite her.

Die Begriffe Vorder- und Rückseite sind in dieser Anmeldung lediglich zur Unterscheidung der beiden Deckflächen des mehrschichtigen Körpers, welcher den Sicherheitsfaden oder das Fensterelement bildet, vorgesehen. Es soll damit keine Vorzugsrichtung für den Sicherheitsfaden bzw. das Fensterelement verbunden sein. Gleiches gilt für die Begriffe "über" und "unter". Sie werden des besseren Verständnisses wegen verwendet und beziehen sich auf eine Orientierung, in der in einer Schnittdarstellung des Fensterelementes oder Sicherheitsfadens die Vorderseite oben liegt. Natürlich soll auch mit diesen Begriffen keine zwangsweise Orientierung des Sicherheitsfadens oder Fensterelementes vorgegeben werden.

Die cholesterischen Flüssigkristallschichten benötigen in der Regel eine glatte Unterlage. Die Schichtstruktur des mehrschichtigen Körpers ist deshalb so ausgebildet, dass eine transparente, geprägte Schicht vorgesehen ist, in deren Oberfläche die Mikrostruktur eingeprägt ist, und dass eine transparente Deckschicht die Mikrostruktur egalisiert, so dass der mehrschichtige Körper auf beiden Deckflächen für die Flüssigkristallschicht eine Unterlage mit der gewünschten Ebenheit aufweist.

Insbesondere bei Fensterelementen ist eine gewisse Festigkeit erforderlich. Diese kann dadurch erreicht werden, dass eine oder mehrere transparente Trägerfolien vorgesehen werden. Diesbezüglich ist es möglich, über der ersten Flüssigkristallschicht und/oder zwischen der ersten Flüssigkristallschicht und der Deckschicht eine transparente Trägerfolie vorzusehen. Alternativ oder zusätzlich kann auch unter der zweiten Flüssigkristallschicht und/oder zwischen der zweiten Flüssigkristallschicht und der geprägten Schicht eine zweite transparente Trägerfolie angebracht werden.

Für das erfindungswesentliche Merkmal, dass die Mikrostruktur sowohl an der Vorderseite mindestens abschnittsweise lichtabsorbierend ist, als auch an der Rückseite mindestens abschnittsweise lichtabsorbierend ist, gibt es verschiedene strukturelle Möglichkeiten.

Eine Möglichkeit liegt darin, die Mikrostruktur mindestens abschnittsweise symmetrisch zu einer Mittelebene auszugestalten, die zwischen Vorder- und Rückseite liegt. Dann fallen die von der Vorderseite lichtabsorbierenden Abschnitte in der Regel mit den von der Rückseite lichtabsorbierenden Abschnitten zusammen. Man erreicht damit, dass der von der Vorderseite durch die Flüssigkristallschicht erzeugte Farbeffekt im perfekten Passer zum Effekt steht, der von der Rückseite her sichtbar ist.

Eine andere Möglichkeit besteht darin, die Mikrostruktur mit ersten und zweiten Bereichen zu versehen, wobei das Profil der Mikrostruktur in den ersten Bereichen invers zum Profil der Mikrostruktur in den zweiten Bereichen ist. Diese Bauform führt dazu, dass das Motiv des von der Vorderseite wahrnehmbaren Farbeffektes negativ zum Motiv des von der Rückseite erkennbaren Farbeffektes ist, da die erste Flüssigkristallschicht sich immer dort über einem von der Vorderseite lichtabsorbierenden Abschnitt der Mikrostruktur befindet, wo die zweite Flüssigkristallschicht gerade über einem nicht oder zumindest schwächer lichtabsorbierenden Abschnitt der Mikrostruktur ist.

Für die lichtabsorbierende Wirkung benötigt die Mikrostruktur eine Kombination aus geeignetem Profil und Metallisierung. Somit kann man durch laterale Strukturierung eines dieser beiden Elemente des lichtabsorbierenden Effekts in Draufsicht auf die Vorderseite oder Rückseite Motive bilden. Es ist deshalb in einer Weiterbildung bevorzugt, die Metallisierung oder die Mikrostruktur mindestens abschnittsweise so zu strukturieren, dass die Strukturierung ein mit dem unbewaffneten Auge erkennbares Muster oder Motiv bereitstellt. Dieses Muster oder Motiv ist ersichtlicherweise sowohl von der Vorderseite als auch von der Rückseite erkennbar, da in den entsprechend strukturierten Bereichen die lichtabsorbierende Wirkung der Mikrostruktur ausbleibt oder geschwächt ist und somit der Farbeffekt, den die entsprechende Flüssigkristallschicht erzeugt, ebenfalls ausbleibt oder geschwächt ist - auf jeden Fall unterscheidet er sich aufgrund der Strukturierung der Metallisierung oder der Mikrostruktur.

Die Metallisierung bewirkt den lichtabsorbierenden Effekt der Mikrostruktur. Eine besonders einfache Realisierung der Metallisierung, die diesen Zweck erfüllt, ist eine Einschichtmetallisierung.

Bei der Lichtstrahlung an Mikrokavitäten kann die gestreute Strahlung in einen spekularen Anteil und einen gestreuten bzw. gebeugten Anteil unterteilt werden. Eine diffuse Lichtstreuung bzw. diffraktive Wirkung der Mikrokavitäten kann für einen Betrachter bei bestimmten Umgebungsbedingungen, insbesondere bei ungerichteten Lichtquellen, wie z. B. Tageslicht, oder bei mehreren Lichtquellen in einem Raum störend sein. Der gewünschte optische Effekt, der von der spekularen Reflexion an den Mikrokavitäten herrührt, wird mit dem gestreuten oder gebeugten Lichtanteil überlagert, was den optischen Eindruck, insbesondere einen Farbkippeffekt mindert. Es zeigte sich nun, dass bei einer bestimmten Anordnung der Mikrokavitäten dieses Problem erheblich reduziert ist, nämlich immer dann, wenn die Mikrokavitäten in Aufsicht in der Anordnung eines nicht-orthogonalen, zweidimensionalen Gitters liegen. Am günstigsten ist eine hexagonale Anordnung, da diese zugleich die beste Flächenbelegung mit Mikrokavitäten ermöglicht. Bei einer hexagonalen Anordnung ist weiter von Vorteil, dass das gebeugte Licht in drei Ebenen verteilt wird, entsprechend den Symmetrieachsen der Anordnung. Bei allen Betrachtungswinkeln, die nicht mit einer solchen Ebene, die durch die Symmetrieachse und die Senkrechte zum Sicherheitselement definiert ist, zusammenfällt, ist der spekulare Anteil in der gestreuten Strahlung maximal und damit der gewünschte Effekt, insbesondere Farbkippeffekt. Das gebeugte oder gestreute Licht wird entlang der Ebene vom Betrachter weg gerichtet und stört den Eindruck der spiegelnden Reflexion, insbesondere den Farbeindruck nicht.

Dies ist besonders vorteilhaft, bei der Anwendung als dunklen Hintergrund.

Es ist deshalb für die Erfindung sowohl hinsichtlich des Sicherheitsfadens oder Fensterelementes als auch des entsprechenden Herstellverfahrens als Weiterbildung bevorzugt, dass die Mikrostruktur in Form der Mikrokavitäten realisiert ist, die in Aufsicht in Form eines nicht-orthogonalen, zweidimensionalen Gittertyps angeordnet sind, insbesondere in Form eines hexagonalen Gittertyps.

Das Fensterelement oder der Sicherheitsfaden können insbesondere zur Sicherung eines Sicherheitspapiers, Wertdokumentes oder dergleichen verwendet werden. Unter Wertdokumenten werden Dokumente verstanden, welche mit dem Fensterelement oder Sicherheitsfaden versehen sind. Auch können Wertdokumente auch sonstige Dokumente oder Gegenstände sein, die mit dem Fensterelement oder Sicherheitsfaden versehen werden, damit sie nicht kopierbare Echtheitsmerkmale aufweisen, um eine Echtheitsüberprüfung zu ermöglichen und unerwünschte Kopien zu verhindern. Chip- oder Sicherheitskarten, wie z. B. Bank- oder Kreditkarten oder Ausweise, sind weitere Beispiele für ein Wertdokument.

Es versteht sich, dass die vorstehend genannten oder die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Zeichnungen, die auch erfindungswesentliche Merkmale offenbaren, noch näher erläutert. Es zeigen:
- Fig. 1: eine schematische Schnittdarstellung durch ein Fensterelement, das unter anderem eine Mikrostruktur in einem transparenten Schichtaufbau aufweist, und
- Fig. 2-4: verschiedene Ausführungsformen für die Mikrostruktur der Fig. 1,
- Fig. 5: eine Betrachtungssituation des Sicherheitselementes der Fig. 1,
- Fig. 6: ein Sicherheitselement ähnlich dem der Fig.1, zusätzlich mit streuender Oberfläche,
- Fig. 7: eine Betrachtungssituation ähnlich der Fig. 5 für das Sicherheitselement der Fig. 6,
- Fig. 8: drei Ansichten für verschiedene Gittertypen, in denen Mikrokavitäten der Mikrostruktur des Sicherheitselements der Fig. 1 angeordnet werden können,
- Fig. 9: eine schematische Schnittdarstellung zur Verdeutlichung der Lichtstreuung an Mikrokavitäten,
- Fig. 10: Messwerte für Reflexionen von Mikrokavitäten, die in der Form eines hexagonalen Gittertyps angeordnet sind, und
- Fig. 11: Draufsichten auf hexagonal angeordnete Mikrokavitäten mit Bereichen unterschiedlicher Aspektverhältnisse für zwei verschiedenförmige Aperturformen.

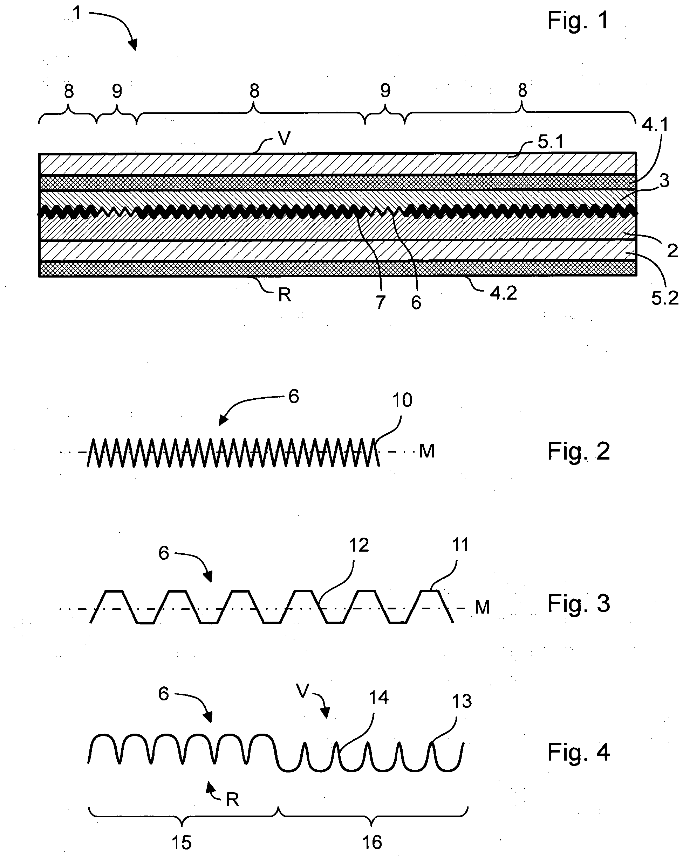

Fig. 1 zeigt in Schnittdarstellung ein Fensterelement 1, das von beiden Seiten einen sichtbaren Effekt darstellt. Die nachfolgende Beschreibung gilt gleichermaßen für einen Sicherheitsfaden oder ein anderes Sicherheitselement.

Das Sicherheitselement 1 weist eine Vorderseite V und eine Rückseite R auf. Auf die oben genannten Ausführungen hinsichtlich dieser Begriffe wird hingewiesen.

Der Kern des Fensterelementes 1 besteht aus einer transparenten oder transluzenten Prägelackschicht 2, die von einer transparenten oder transluzenten Decklackschicht 3 abgedeckt ist. Auf die Decklackschicht 3 ist eine erste Flüssigkristallschicht 4.1 aufgebracht. Die cholesterische Flüssigkristallschicht 4.1 erzeugt einen blickwinkelabhängigen Farbeffekt und ist in ihrer Struktur aus dem Stand der Technik bekannt. Es wird diesbezüglich auf die EP 2505377 A1 verwiesen, die in Beispielen 1 bis 4 solche Flüssigkristallschichten erwähnt und sie mit Vergleichsbeispielen 5 und 6 vergleicht. Die besonders relevanten Abschnitte der Veröffentlichung sind die Absätze 200 bis 251.

Eine erste PET-Folie 5.1 wird hinsichtlich Stabilisierung des Fensterelementes 1 unterstützt von einer zweiten PET-Folie 5.2, auf welche die Prägelackschicht 2 aufgebracht ist. Unter der zweiten PET-Folie 5.2 befindet sich eine zweite cholesterische Flüssigkristallschicht 4.2, die hinsichtlich Struktur und Zusammensetzung mit der ersten Flüssigkristallschicht 4.1 identisch sein kann, jedoch auch unterschiedlich ausgebildet sein kann. Die Reihenfolge jeder Flüssigkristallschicht und der zugehörigen PET-Folie können getauscht werden. Die PET-Folien sind optional. Es kann auch nur eine PET-Folie verwendet werden.

In die Grenzschicht zwischen Prägelackschicht 2 und Decklackschicht 3 ist eine Mikrostruktur 6 eingeformt, die zumindest abschnittsweise mit einer Metallisierung 7 versehen ist. Die Prägelackschicht 2 und die Decklackschicht 3 stellen zur Vorderseite V und zur Rückseite R hin jeweils eine ebene Oberfläche bereit, wie sie für eine gute Wirkung der Flüssigkristallschichten 4.1 und 4.2 nötig ist. Zwischen der Prägelackschicht 2 und der Decklackschicht 3 befindet sich hingegen die Mikrostruktur 6.

Die Mikrostruktur 6 ist so ausgebildet, dass sie in metallisierten Abschnitten von der Vorderseite V her mindestens abschnittsweise lichtabsorbierend ist. Sie ist ebenfalls von der Rückseite R her mindestens abschnittsweise lichtabsorbierend. In der Schnittdarstellung der Fig. 1 ist die Metallisierung 7 lediglich in Abschnitten 8 aufgebracht. Zwischen den Abschnitten 8 liegen Abschnitte 9, in denen keine Metallisierung vorhanden ist. Aufgrund dieser fehlenden Metallisierung ist die Mikrostruktur 6 in den Abschnitten 9 nicht lichtabsorbierend, sowohl von der Vorderseite V als auch von der Rückseite R her. Diese Ausgestaltung bietet sich insbesondere an, wenn die Mikrostruktur 6 eine Sub-Wellenlängenstruktur 10 ist, wie sie systematisch Fig. 2 zeigt.

Diese Sub-Wellenlängenstruktur 10 ist bei geeigneter Metallisierung lichtabsorbierend. Sie ist weiter im Ausführungsbeispiel der Fig. 2 symmetrisch zu einer Mittelebene M ausgebildet, so dass ihre lichtabsorbierende Wirkung sowohl von der Vorderseite V als auch von der Rückseite R her gegeben ist, wenn die Metallisierung 7 aufgebracht ist. Die Metallisierung 7 ist in Fig. 2 sowie den weiteren Figuren 3 und 4 der Einfachheit halber nicht gezeigt. Mit der Ausgestaltung der Mikrostruktur 6 gemäß Fig. 2 ist erreicht, dass die lichtabsorbierenden Abschnitte 8 bezüglich Vorderseite V und Rückseite R in exaktem Passer zueinander stehen.

Denselben Effekt erreicht man mit einer Bauweise gemäß Fig. 3. Hier ist die Mikrostruktur 6 als symmetrische Mikrokavitätenstruktur 11 ausgebildet, die sowohl von der Vorderseite V als auch von der Rückseite R her Mikrokavitäten 12 aufweist, welche die eingangs genannten Aperturweiten und Aspektverhältnisse haben. Natürlich ist es möglich, sowohl Strukturweite als auch Aspektverhältnis innerhalb der Mikrostruktur 6 zu variieren, um ein zusätzliches Muster in Draufsicht auf die Vorderseite V und die Rückseite R zu erzielen. Dann kann von der Symmetrie um die Mittelebene M abgewichen werden.

Ein Beispiel für eine asymmetrische Mikrostruktur 6 zeigt die Fig. 4. Hier sind exemplarisch erste Bereiche 15 eingezeichnet, in denen die Mikrostruktur 6 lediglich von der Rückseite her lichtabsorbierend ist, nicht jedoch von der Vorderseite V her. Die Mikrostruktur 6 der Fig. 4 umfasst weiter exemplarisch einen zweiten Bereich 16, in dem die Mikrostruktur von der Vorderseite V her lichtabsorbierend ist, nicht jedoch von der Rückseite R her. Es handelt sich bei der Mikrostruktur 6 der Fig. 4 also um eine asymmetrische Mikrokavitätenstruktur 13, deren einzelne Mikrokavitäten 4 dafür sorgen, dass nur von einer Seite Lichtabsorption erreicht ist.

Für die Lichtabsorption ist es natürlich, wie eingangs erwähnt, zwingend erforderlich, dass eine geeignete Metallisierung auf der Mikrostruktur 6 vorgesehen ist. Die lichtabsorbierenden Eigenschaften können damit dadurch eingestellt werden, dass die Abschnitte 8 mit Metallisierung 7 und die Abschnitte 9 ohne Metallisierung 7 entsprechend gestaltet werden, um in Draufsicht von Vorder- oder Rückseite ein Muster oder Motiv für das Fensterelement bereitzustellen. Alternativ oder zusätzlich können die lichtabsorbierenden Eigenschaften durch die geeignete Strukturierung einer asymmetrischen Mikrostruktur erreicht werden, wie dies die Fig. 4 exemplarisch zeigt. Die beiden Maßnahmen stellen jeweils für sich die Absorptionseigenschaft der Grenzschicht zwischen der Prägelackschicht 2 und der Decklackschicht 3 ein. Die Kombination der beiden Maßnahmen ist gleichermaßen möglich und erlaubt besonders feine Einstellungen hinsichtlich der Struktur der Lichtabsorption und damit des optisch variablen Farbeffektes, der durch die Flüssigkristallschichten 4.1 und 4.2 erzeugt wird und damit eine letztlich besonders feine Motivgestaltung.

Die Lichtabsorptionseigenschaften der Grenzschicht zwischen der Prägelackschicht 2 und der Decklackschicht 3 wurden vorstehend lediglich hinsichtlich eines "Alles-oder-Nichts" -Effektes der Lichtabsorption beschrieben. Durch geeignete Strukturwahl für die Mikrostruktur 6 und/oder geeignete Beschichtung der Metallisierung 7 lässt sich jedoch ein variierendes Lichtabsorptionsvermögen herstellen, was hochaufgelöste Motive erlaubt.

Natürlich können die dargestellten Maßnahmen kombiniert werden mit bekannten Kopierschutzprinzipien. So ist es beispielsweise möglich, eine zusätzlich strukturierte Magnetschicht vorzusehen, in der eine Magnetstruktur vorgesehen ist. Auch können Fluoreszenzelemente verwendet werden.

Die Strukturierung der Metallisierung kann auf verschiedenste Art und Weise erfolgen. Hierzu hat der Fachmann ein breites Arsenal an Verfahren zur Verfügung, was insbesondere das Ätzen oder das Verwenden von Waschfarben umfasst, um eine vollflächige Metallisierung wieder abschnittsweise zu demetallisieren.

Die Herstellung der Mikrostruktur erfolgt bevorzugt durch Laserdirektbelichtung in einem photolithographischen Verfahren. Mikrostrukturen mit Abmessungen bis zu einem minimalen Durchmesser von etwa 500 nm können mit Hilfe eines Laser-Writers direkt in Photolack geschrieben werden. Hierbei können sogar Strukturen mit Aspektverhältnissen größer als 1 erzeugt werden. Die Tiefe der einzelnen Vertiefungen kann sehr einfach durch die Wahl der Belichtungsintensität variiert werden. Zur Herstellung von Mikrokavitäten mit hoher Genauigkeit kommen auch e-Beam bzw. Focussed-Ion-Beam-Belichtungsverfahren in Frage.

Ein belichtetes Original kann nach dem Entwickeln des Photolacks anschließend galvanisch abgeformt und über einen Prägeprozess in Prägelack (z. B. UV-Lack) oder durch Heißprägen auf Folie repliziert werden. Im nächsten Schritt erfolgt eine metallische Beschichtung der Oberfläche. Metallisierte Oberflächen können beispielsweise durch Elektronenstrahlbedampfen, Sputtern oder durch thermisches Verdampfen unter Vakuum hergestellt werden. Als Beschichtungsmaterial eignen sich alle gängigen Metalle mit hoher Reflexion im sichtbaren Bereich, besonders aber Al, Ag, Au, Ni, Cr. Anschließend wird die beschichtete Seite mit der Decklackschicht überzogen oder mit einer Deckschicht kaschiert.

Bei der Nanostruktur kann es sich um z. B. 2-dim periodische Gitter handeln. Eine bevorzugte Variante sind sogenannte Mottenaugenstrukturen, welche aperiodisch angeordnet sind. Sie weisen eine besonders geringe Reflexion auf, zeigen keinerlei Beugungseffekte.

Die Herstellung von Sub-Wellenlängenstrukturen erfolgt standardmäßig mit photolithographischen Verfahren, insbesondere mit einer e-Beam-Anlage. Jedoch sind auch weitere bekannte Verfahren, wie Interferenzlithographie oder mechanisches Ritzen, denkbar. Aperiodische Strukturen werden bevorzugt durch Ionenbeschuss bzw. durch Plasmaätzen von Kunststoffoberflächen erzeugt. Die so hergestellten Originale können anschließend galvanisch oder unter Verwendung von Photopolymeren (z. B. Ormocere) umkopiert werden.

Die laterale Ausgestaltung der Oberfläche und damit die Motiverzeugung erfolgt in einem anschließenden photolithographischen Belichtungsprozess, z. B. durch direktes Laserstrahlschreiben. Hierzu wird die homogene Gitterfläche bzw. Fläche von Mottenaugenstrukturen mit Photolack eingeebnet. Durch eine anschließende Belichtung des Photolacks wird die Struktur in den gewünschten Bereichen wieder freigelegt.

Das so hergestellte Original kann nun durch Standardverfahren kopiert und vervielfältigt werden. Nach der Herstellung eines Prägezylinders, kann die Struktur in einem kontinuierlichen Prozess auch auf eine Folie geprägt werden. Hier bei kommen Heißprägen oder Nano-Casting in Prägelack (z. B. UV-Lack) in Frage. Schließlich kann die geprägte Folie metallisch beschichtet werden. Die gängigen Bedampfungsverfahren sind wieder Elektronenstrahlbedampfen, thermisches Verdampfen bzw. Sputtern. Hier finden die bereits oben erwähnten Metalle Verwendung. Letztendlich wird die metallisierte Struktur mit der Decklackschicht überzogen oder mit einer Deckfolie kaschiert.

Für die Erfindung ist es kennzeichnend, dass ein lokal unterschiedliches Absorptionsvermögen der Grenzschicht zwischen der Prägelackschicht 2 und der Decklackschicht 3 durch geeignete Strukturierung der Mikrostruktur 6 und/oder der Metallisierung 7 einfach hergestellt werden kann, wobei eine automatische Passerung zwischen Vorder- und Rückseite V, R, d. h. des Motivs mit dem Farbeffekt, den die erste Flüssigkristallschicht 4.1 zeigt, und des Motivs mit dem Farbeffekt, den die zweite Flüssigkristallschicht 5.2 zeigt, erreicht ist.

Die Flüssigkristallschicht kann zusätzlich zur Verbesserung des Farbeffektes mit weiteren Schichten kombiniert werden. Optisch anisotrope Schichten sollten, um ihre Wirkung (Nachweis durch Benutzung eines geeigneten Polarisationsfilters oder von polarisiertem Licht) optimal zu entfalten, eine für den jeweils eingesetzten Reflektor geeignete Doppelbrechung aufweisen. Wenn in der Flüssigkristallschicht nematische Flüssigkristalle auf cholesterischen Flüssigkristallen eingesetzt werden, ist eine λ/2-Schicht von Vorteil. In Bereichen mit einer einfachen Metallisierung ist eine λ/4-Schicht ideal. Eine zusätzliche cholesterische Flüssigkristallschicht über einer hochreflektiven Metallisierung ist nicht von Vorteil und kann beim Polarisationseffekt/ Kontrast von Nachteil sein. Daher ist auch eine Variante interessant, bei der die Flüssigkristallschicht zunächst nematische Flüssigkristalle aufweist, wobei die Schichtdicke über die Fläche so variiert wird, dass je nach voraussichtlich über dem jeweiligen Bereich später liegenden Reflektor die Schichtdicke angepasst wird. Anschließend werden cholesterische Flüssigkristalle über die nematische Flüssigkristallschicht gedruckt, wobei die Bereiche, die später über einem hochreflektiven Untergrund liegen, bevorzugt ausgespart werden. Diese zusätzliche nematische Flüssigkristallschicht kann sowohl für die erste Flüssigkristallschicht 4.1 als auch für die zweite Flüssigkristallschicht 4.2 zusätzlich zur dort vorgesehenen cholesterischen Flüssigkristallschicht verwendet werden.

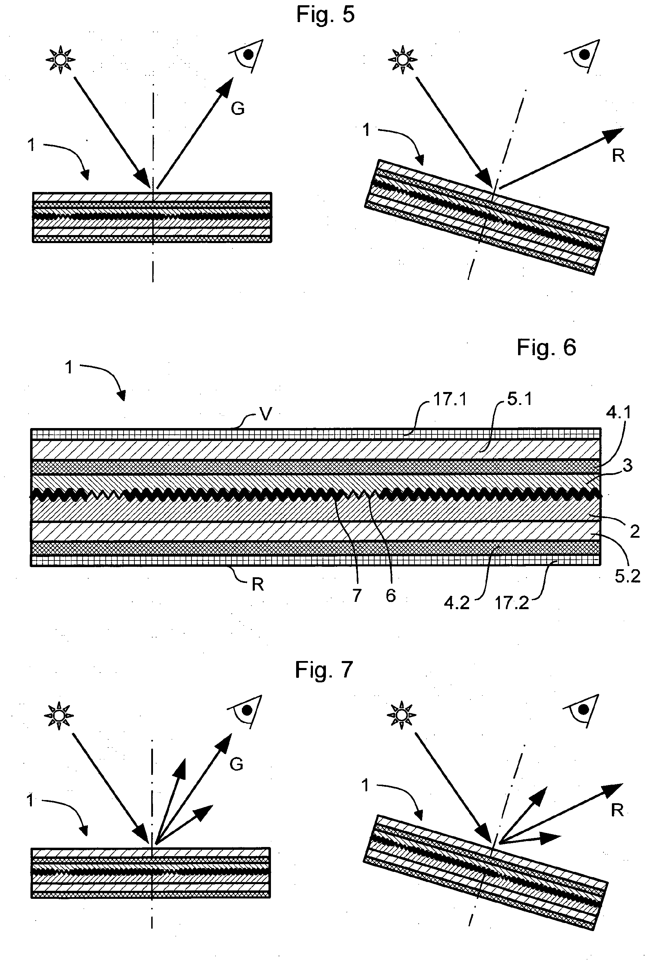

Optisch variable Elemente, wie Flüssigkristallschichten, zeigen im Allgemeinen eine unterschiedliche Farbe für verschiedene Betrachtungswinkel. In der Praxis dominiert eine Raumrichtung des einfallenden Lichtes, wie bei Raumbeleuchtung oder Tageslicht, insbesondere bei Sonnenschein. Fig. 5 zeigt eine solche typische Betrachtungssituation des Sicherheitselementes 1 gemäß Fig. 1, d. h. bei einer gerichteten Lichtquelle. Wenn ein Betrachter das Sicherheitselement im Glanzwinkel betrachtet, sieht er das an den Bragg-Ebenen der Flüssigkristallschicht 4.1 reflektierte Licht als grüne Farbe. Dreht er das Sicherheitselement 1, erscheint es dunkel, da die spiegelnde Reflexion nicht mehr zum Auge des Betrachters gelangt. Um die an den Bragg-Ebenen reflektierte rote Farbe zu sehen, muss der Beobachter das Sicherheitselement 1 lateral so verschieben, dass der in der Darstellung eingezeichnete Strahlengang auf sein Auge trifft.

Der visuelle Eindruck des Sicherheitselementes ist in einer Weiterbildung verbessert, indem eine erste lichtstreuende Schicht 17.1 oberhalb der ersten Flüssigkristallschicht 4.1 vorgesehen ist. Diese Schicht kann als raue Reliefoberfläche oder auch als Streumedium ausgelegt sein. Sie fächert transmittiertes Licht um etwa 5° bis 10° auf. Eine solche Anordnung ist in Fig. 6 dargestellt, die auch eine zweite lichtstreuende Schicht 17.2 unter der zweiten Flüssigkristallschicht 4.2 hat. Natürlich kann das lichtstreuende Medium auch nur auf einer Seite vorgesehen werden. Aufgrund des Streumediums, sieht ein Betrachter anders als in der Situation der Fig. 5 bereits nach einer Drehung die zweite Farbe als Streuanteil des einfallenden Lichtes (siehe Fig. 7). Dies erhöht die Erkennungswahrscheinlichkeit des Sicherheitselementes 1 und ist daher vorteilhaft bei der Verwendung als Sicherheitsmerkmal.

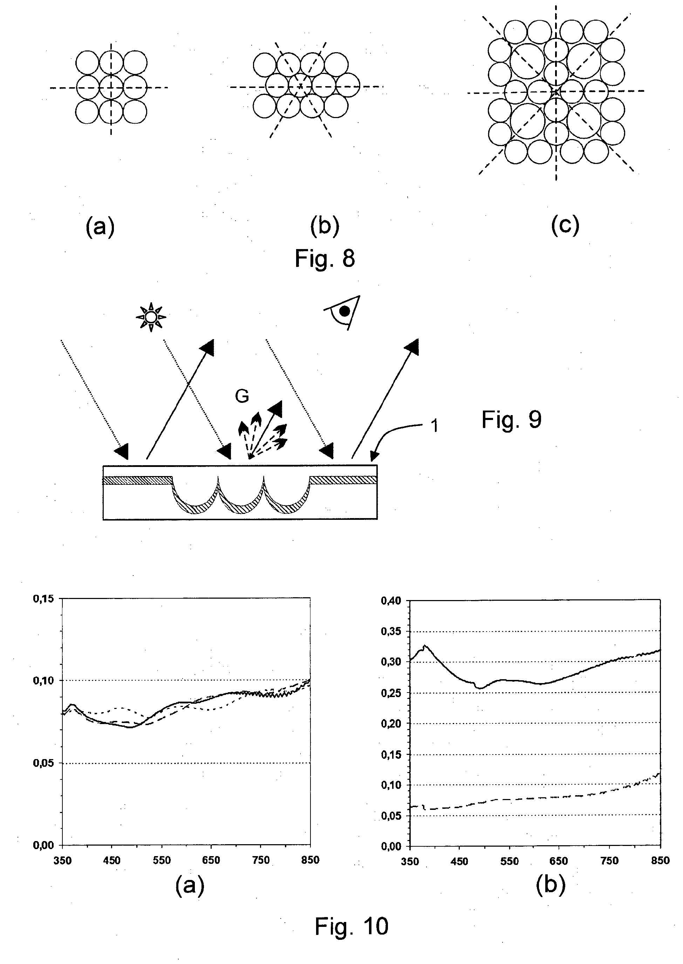

Fig. 8 zeigt in drei Darstellungen a-c die Draufsicht auf verschiedene Anordnungen von Mikrokavitäten mit unterschiedlichen Symmetrien. Fig. 8a zeigt die Anordnung in einem orthogonalen Gittertyp, Fig. 8b in einem hexagonalen Gittertyp und Fig. 8c das Beispiel eines oktagonalen Gittertyps. Die dominierenden Richtungen der Beugung von einfallender Strahlung ergeben sich aus den kürzesten Abständen benachbarter Kavitäten.

Bei der orthogonalen Anordnung gemäß Fig. 8a ergeben sich zwei senkrecht zueinander stehende Raumrichtungen, in denen die Beugung/Streuung stattfindet. Bei der hexagonalen Anordnung sind es drei und bei der oktagonalen Anordnung vier Richtungen. Durch die höhere Anzahl an Richtungen der hexagonalen und oktagonalen Anordnung haben ungerichtete Lichtquellen oder mehrere Lichtquellen in einem Raum einen sehr viel weniger störenden Einfluss, als bei der orthogonalen Anordnung gemäß Fig. 8a. Senkrecht zur Zeichenebene stehende Ebenen durch die veranschaulichten Symmetrieachsen sind diejenigen Ebenen, in denen das gebeugte Licht mit besonders hoher Intensität dispergiert wird. Bei einer normalen Betrachtungssituation fällt das Licht von oben auf die leicht zum Betrachter hin gekippte Oberfläche. Im Fall der Fig. 8b wird das Licht dann seitlich vom Betrachter weggebeugt, und stört einen Farbeindruck der spiegelnden Reflexion nicht, wie Fig. 9 zeigt.

Dies verdeutlicht die Fig. 10. Die Kurven der Fig. 10 sind für eine Mikrokavität mit einer Apertur von 0,6 µm Durchmesser gewonnen. Die Tiefe der Mikrokavitäten beträgt 0,4 µm, woraus sich ein Aspektverhältnis von 2/3 ableitet. Die Oberfläche der Struktur ist mit 80 nm Aluminium überzogen und die Mikrokavitäten liegen in der Anordnung eines hexagonalen Gittertyps, also in der Anordnung gemäß Fig. 8b.

Die linke Darstellung, Fig. 10a, zeigt die spekulare, wellenlängenabhängige Reflexion bei unterschiedlichen Glanzwinkeln, nämlich 8° (durchgezogen gezeichnet), 15° (lang-gestrichelt eingetragen) und 30° (kurz-gestrichelt eingetragen). Fig. 10b zeigt die Reflexion bei 8° aufgeteilt in Gesamtreflexion (durchgezogen eingezeichnet) und spekulare Reflexion (gestrichelt eingetragen). Die spekulare Reflexion liegt im Mittel bei etwa 7% und ist weitgehend unabhängig vom Glanzwinkel. Jedoch liegt die gesamte Reflexion im sichtbaren Spektralbereich im Mittel bei etwa 27°. Der diffuse Anteil von etwa 20% wird in unterschiedliche Richtungen gebeugt oder gestreut. Nur ein kleiner Anteil davon fällt auf den Betrachter und beeinflusst die Farbwahrnehmung, die von der Flüssigkristallschicht bewirkt wird.

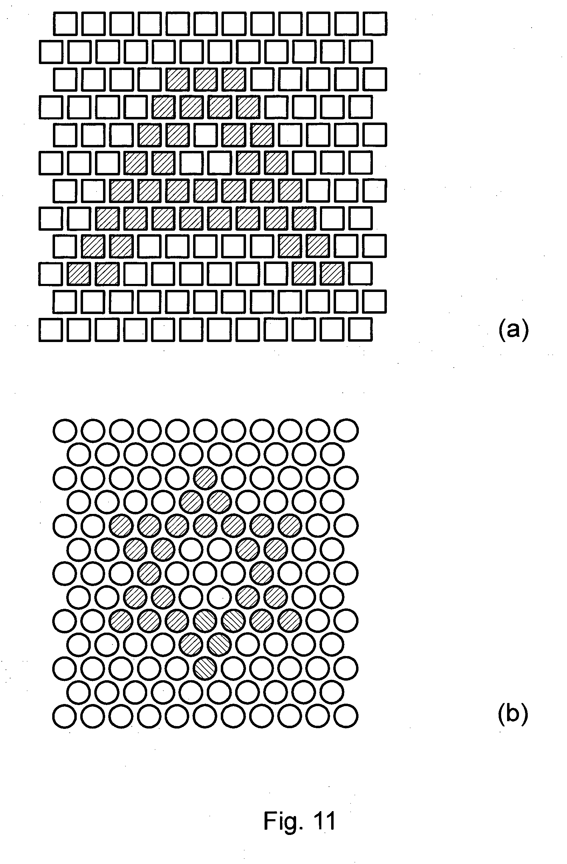

Die hexagonale Anordnung von Mikrokavitäten kann benutzt werden, um hochaufgelöste Motive kontrastrecht zu gestalten. Durch die Tiefe der Mikrokavitäten bei gleicher Apertur oder allgemein durch das Aspektverhältnis der Mikrokavitäten, kann im Zusammenhang mit der LC-Schicht der Farbeindruck modifiziert werden. Fig. 11 zeigt exemplarisch hexagonal angeordnete Mikrokavitäten mit unterschiedlicher Apertur. In Fig. 11a sind die Aperturen kreisförmig, in Fig. 11b quadratisch. Die schraffierten Aperturen gehören Mikrokavitäten mit einem höheren Aspektverhältnis, also einer höheren Tiefe, als die Aperturen ohne Schraffur. Die tieferen Mikrokavitäten erzeugen eine starke Absorptionswirkung, die vergleichsweise flacheren Mikrokavitäten streuen dagegen einfallendes Licht. Auf diese Weise kann ein Motiv erzeugt werden. Natürlich können die Mikrokavitäten auch mit unstrukturierten, d. h. glatten Flächenelementen eines Mikrobildes kombiniert werden.

### Bezugszeichenliste

- 1: Fensterelement
- 2: Prägelackschicht
- 3: Decklackschicht
- 4.1, 4.2: erste, zweite Flüssigkristallschicht
- 5.1, 5.2: erste, zweite PET-Folie
- 6: Mikrostruktur
- 7: Metallisierung
- 8,9: Abschnitt
- 10: Sub-Wellenlängenstruktur
- 11: symmetrische Mikrokavitätenstruktur
- 12: Mikrokavität
- 13: asymmetrische Mikrokavitätenstruktur
- 14: Mikrokavität
- 15: erster Bereich
- 16: zweiter Bereich
- 17.1: erste lichtstreuende Schicht
- 17.2: zweite lichtstreuende Schicht
- V: Vorderseite
- R: Rückseite
- M: Mittelebene

## Patentansprüche

1. Sicherheitsfaden oder Fensterelement für einen Wertgegenstand, der/das einen mehrschichtigen Körper mit einer Vorderseite (V) und einer Rückseite (R) hat, der aufweist:
- eine transparente, geprägte Schicht (2), in deren Oberfläche eine Mikrostruktur (6) eingeprägt ist,
- eine Metallisierung (7), die mindestens auf Teilen der Oberfläche der geprägten Schicht (2) aufgebracht ist,
- eine auf die Oberfläche und über die Metallisierung (7) aufgebrachte, transparente Deckschicht (3), welche die Mikrostruktur (6) egalisiert,
- eine über der Deckschicht (3) aufgebrachte, erste Flüssigkristallschicht (4.1), wobei
- die Mikrostruktur (6) entweder eine Sub-Wellenlängenstruktur (10) ist oder Mikrokavitäten (12), aufweisend eine Aperturweite von 0,5 µm bis 3 µm und ein Aspektverhältnis von 0,5 und größer, umfasst und so ausgebildet ist, dass sie sowohl von der Vorderseite (V) als auch von der Rückseite (R) her mindestens abschnittsweise lichtabsorbierend ist, **dadurch gekennzeichnet, dass**
- unter der geprägten Schicht (2) eine zweite Flüssigkristallschicht (4.2) vorgesehen ist.

2. Sicherheitsfaden oder Fensterelement nach Anspruch 1, **dadurch gekennzeichnet, dass** über der ersten Flüssigkristallschicht (4.1) oder zwischen der ersten Flüssigkristallschicht (4.1) und der Deckschicht (3) eine erste transparente Trägerfolie (5.1) angebracht ist.

3. Sicherheitsfaden oder Fensterelement nach einem der Ansprüche 1 oder 2, **dadurch gekennzeichnet, dass** unter der zweiten Flüssigkristallschicht (4.2) oder zwischen der zweiten Flüssigkristallschicht (4.2) und der geprägten Schicht (2) eine zweite transparente Trägerfolie (5.2) angebracht ist.

4. Sicherheitsfaden oder Fensterelement nach einem der Ansprüche 1 bis 3, **dadurch gekennzeichnet, dass** die Mikrostruktur (6) ein Profil aufweist, das mindestens abschnittsweise symmetrisch zu einer Mittelebene (M) ist, die zwischen Vorder- und Rückseite (V, R) liegt und/oder dass die Mikrostruktur (6) erste und zweite Bereiche (15,16) aufweist, wobei ein Profil der Mikrostruktur (6) in den ersten Bereichen (15) invers zum Profil der Mikrostruktur (6) in den zweiten Bereichen (16) ist.

5. Sicherheitsfaden oder Fensterelement nach einem der Ansprüche 1 bis 4, **dadurch gekennzeichnet, dass** die Metallisierung (7) oder die Mikrostruktur (6) mindestens abschnittsweise so strukturiert ist, dass die Strukturierung ein mit dem unbewaffneten Auge erkennbares Muster oder Motiv bereitstellt.

6. Sicherheitsfaden oder Fensterelement nach einem der Ansprüche 1 bis 5, **dadurch gekennzeichnet, dass** die Metallisierung (7) eine Einschichtmetallisierung ist.

7. Sicherheitsfaden oder Fensterelement nach einem der Ansprüche 1 bis 6, **dadurch gekennzeichnet, dass** über der ersten Flüssigkristallschicht (4.1) und/oder unter der zweiten Flüssigkristallschicht (4.2) eine lichtstreuende Schicht (17.1; 17.2) vorgesehen ist.

8. Sicherheitsfaden oder Fensterelement nach einem der Ansprüche 1 bis 7, **dadurch gekennzeichnet, dass** die Mikrostruktur in Form der Mikrokavitäten (12) realisiert ist, wobei die Mikrokavitäten (12) in Aufsicht in Form eines nicht-orthogonalen, zweidimensionalen Gittertyps angeordnet sind, insbesondere in Form eines hexagonalen Gittertyps.

9. Verfahren zur Herstellung eines Sicherheitsfadens oder Fensterelements für einen Wertgegenstand, wobei ein mehrschichtiger Körper mit einer Vorderseite (V) und einer Rückseite (R) hergestellt wird und dazu folgende Schritte ausgeführt werden:
- eine transparente Schicht (2) wird bereitgestellt und in deren Oberfläche eine Mikrostruktur (6) eingeprägt,
- mindestens auf Teile der Oberfläche der geprägten Schicht (2) wird eine Metallisierung (7) aufgebracht,
- auf die Oberfläche und über die Metallisierung (7) wird eine transparente Deckschicht (3), welche die Mikrostruktur (6) egalisiert, aufgebracht,
- über der Deckschicht (3) wird eine erste Flüssigkristallschicht (4.1) aufgebracht,
- wobei die Mikrostruktur (6) entweder als Sub-Wellenlängenstruktur (10) oder Mikrokavitäten (12), aufweisend eine Aperturweite von 0,5 bis 3 µm und ein Aspektverhältnis von 0,5 und größer, ausgebildet und so gestaltet wird, dass sie sowohl von der Vorderseite (V) als auch von der Rückseite (R) her mindestens abschnittsweise lichtabsorbierend ist, **dadurch gekennzeichnet, dass**
- unter der geprägten Schicht (2) wird eine zweite Flüssigkristallschicht (4.2) vorgesehen.

10. Verfahren nach Anspruch 9, **dadurch gekennzeichnet, dass** über der ersten Flüssigkristallschicht (4.1) eine erste transparente Trägerfolie (5.1) angebracht oder vor dem Aufbringen der ersten Flüssigkristallschicht (4.1) auf die Deckschicht (3) eine erste transparente Trägerfolie (5.1) angebracht wird.

11. Verfahren nach einem der Ansprüche 9 oder 10, **dadurch gekennzeichnet, dass** unter der zweiten Flüssigkristallschicht (4.2) eine zweite transparente Trägerfolie (5.2) angebracht oder vor dem Aufbringen der zweiten Flüssigkristallschicht (4.2) unter die geprägte Schicht (2) eine zweite transparente Trägerfolie (5.2) angebracht wird.

12. Verfahren nach einem der Ansprüche 9 bis 11, **dadurch gekennzeichnet, dass** die Mikrostruktur (6) mit einem Profil versehen wird, das mindestens abschnittsweise symmetrisch zu einer Mittelebene (M), die zwischen Vorder- und Rückseite (V, R) liegt, ausgebildet wird oder dass die Mikrostruktur (6) mit ersten und zweiten Bereichen (15, 16) ausgebildet wird, die zueinander inverses Profil haben.

13. Verfahren nach einem der Ansprüche 9 bis 12, **dadurch gekennzeichnet, dass** die Metallisierung (7) oder die Mikrostruktur (6) mindestens abschnittsweise so strukturiert wird, dass ein mit dem unbewaffneten Auge erkennbares Muster oder Motiv bereitgestellt wird, wobei bevorzugt eine flächige Metallisierung aufgebracht und dann abschnittsweise wieder entfernt wird.

14. Verfahren nach einem der Ansprüche 9 bis 13, **dadurch gekennzeichnet, dass** die Metallisierung (7) als eine Einschichtmetallisierung aufgebracht wird.

15. Verfahren nach einem der Ansprüche 9 bis 14, **dadurch gekennzeichnet, dass** über der ersten Flüssigkristallschicht (4.1) und/oder unter der zweiten Flüssigkristallschicht (4.2) eine lichtstreuende Schicht (17,1; 17.2) angeordnet wird.

16. Verfahren nach einem der Ansprüche 9 bis 15, **dadurch gekennzeichnet, dass** die Mikrostruktur als Mikrokavitäten ausgebildet wird, wobei die Mikrokavitäten (12) in Aufsicht in Form eines nicht-orthogonalen, zweidimensionalen Gittertyps angeordnet sind, insbesondere in Form eines hexagonalen Gittertyps.

## Claims

1. Security thread or window element for a valuable object, having a multilayered body with a front side (V) and a rear side (R), comprising:
- a transparent, embossed layer (2), having a microstructure (6) embossed in its surface,
- a metallization (7) applied at least to portions of the surface of the embossed layer (2),
- a transparent capping layer (3), which has been applied onto the surface and over the metallization (7) and which levels the microstructure (6),
- a first liquid crystal layer (4.1) which has been applied over the capping layer (3),
wherein
- the microstructure (6) is either a sub-wavelength structure (10) or comprises micro-cavities (12), having an aperture dimension of 0.5 µm to 3 µm and an aspect ratio of 0.5 and above, and is embodied in such a way that it is light absorbing at least in sections both from the front side (V) and from the rear side (R), **characterized in that**
- a second liquid crystal layer (4.2) is provided under the embossed layer (2).

2. Security thread or window element according to Claim 1, **characterized in that** a first transparent carrier film (5.1) is placed over the first liquid crystal layer (4.1) or between the first liquid crystal layer (4.1) and the capping layer (3).

3. Security thread or window element according to either of Claims 1 and 2, **characterized in that** a second transparent carrier film (5.2) is placed under the second liquid crystal layer (4.2) or between the second liquid crystal layer (4.2) and the embossed layer (2).

4. Security thread or window element according to one of Claims 1 to 3, **characterized in that** the microstructure (6) has a profile that is, at least in sections, symmetrical in relation to a centre plane (M), which is located between the front and rear sides (V, R), and/or **in that** the microstructure (6) comprises first and second regions (15, 16), wherein a profile of the microstructure (6) in the first regions (15) is inverted in relation to the profile of the microstructure (6) in the second regions (16).

5. Security thread or window element according to one of Claims 1 to 4, **characterized in that** the metallization (7) or the microstructure (6) is structured at least in sections such that the structuring provides a pattern or motif that is identifiable with the naked eye.

6. Security thread or window element according to one of Claims 1 to 5, **characterized in that** the metallization (7) is a single-layer metallization.

7. Security thread or window element according to one of Claims 1 to 6, **characterized in that** a light-scattering layer (17.1; 17.2) is provided over the first liquid crystal layer (4.1) and/or under the second liquid crystal layer (4.2).

8. Security thread or window element according to one of Claims 1 to 7, **characterized in that** the microstructure is realized in the form of the micro-cavities (12), wherein the micro-cavities (12) are arranged, in plan view, in the form of a non-orthogonal, two-dimensional grid type, in particular in the form of a hexagonal grid type.

9. Method for producing a security thread or window element for a valuable object, wherein a multilayered body having a front side (V) and a rear side (R) is produced, and to this end the following steps are performed:
- providing a transparent layer (2) and embossing a microstructure (6) in the surface thereof,
- applying a metallization (7) at least to portions of the surface of the embossed layer (2),
- applying a transparent capping layer (3), which levels the microstructure (6), onto the surface and over the metallization (7),
- applying a first liquid crystal layer (4.1) over the capping layer (3),
- wherein the microstructure (6) is embodied either as a sub-wavelength structure (10) or as micro-cavities (12), having an aperture dimension of 0.5 µm to 3 µm and an aspect ratio of 0.5 and above, and is designed in a manner such that it is light absorbing at least in sections both from the front side (V) and from the rear side (R), **characterized in that**
- a second liquid crystal layer (4.2) is provided under the embossed layer (2).

10. Method according to Claim 9, **characterized in that** a first transparent carrier film (5.1) is placed over the first liquid crystal layer (4.1) or a first transparent carrier film (5.1) is placed onto the capping layer (3) before the first liquid crystal layer (4.1) is applied.

11. Method according to one of Claims 9 or 10, **characterized in that** a second transparent carrier film (5.2) is placed under the second liquid crystal layer (4.2) or a second transparent carrier film (5.2) is placed under the embossed layer (2) before the second liquid crystal layer (4.2) is applied.

12. Method according to one of Claims 9 to 11, **characterized in that** the microstructure (6) is given a profile which is, at least in sections, symmetric with respect to a centre plane (M), which is located between the front and rear sides (V, R), or **in that** the microstructure (6) is formed with first and second regions (15, 16), which have profiles that are inverted in relation to one another.

13. Method according to one of Claims 9 to 12, **characterized in that** the metallization (7) or the microstructure (6) is structured, at least in sections, such that a pattern or motif is produced that is identifiable with the naked eye, wherein preferably an extensive metallization is applied and then removed again in sections.

14. Method according to one of Claims 9 to 13, **characterized in that** the metallization (7) is applied as a single-layer metallization.

15. Method according to one of Claims 9 to 14, **characterized in that** a light-scattering layer (17.1; 17.2) is arranged over the first liquid crystal layer (4.1) and/or under the second liquid crystal layer (4.2).

16. Method according to one of Claims 9 to 15, **characterized in that** the microstructure is embodied in the form of micro-cavities, wherein the micro-cavities (12) are arranged, in plan view, in the form of a non-orthogonal, two-dimensional grid type, in particular in the form of a hexagonal grid type.

## Revendications

1. Fil de sécurité ou élément de fenêtre pour un objet de valeur, qui comporte un corps multicouche avec un côté avant (V) et un côté arrière (R), qui présente:
- une couche transparente gaufrée (2), dans la surface de laquelle une microstructure (6) est imprimée,
- une métallisation (7), qui est déposée au moins sur des parties de la surface de la couche gaufrée (2),
- une couche transparente de couverture (3), déposée sur la surface et au-dessus de la métallisation (7), qui égalise la microstructure (6),
- une première couche de cristaux liquides (4.1) déposée au-dessus de la couche de couverture (3),
dans lequel
- la microstructure (6) soit est une structure de sous-longueur d'onde (10) soit comprend des microcavités (12), présentant une largeur d'ouverture de 0,5 µm à 3 µm et un rapport d'aspect de 0,5 ou supérieur, et est formée de telle manière qu'elle absorbe au moins partiellement la lumière aussi bien par le côté avant (V) que par le côté arrière (R), **caractérisé en ce qu'**il est prévu sous la couche gaufrée (2) une deuxième couche de cristaux liquides (4.2).

2. Fil de sécurité ou élément de fenêtre selon la revendication 1, **caractérisé en ce qu'**une première feuille de support transparente (5.1) est placée au-dessus de la première couche de cristaux liquides (4.1) ou entre la première couche de cristaux liquides (4.1) et la couche de couverture (3).

3. Fil de sécurité ou élément de fenêtre selon une des revendications 1 ou 2, **caractérisé en ce qu'**une deuxième feuille de support transparente (5.2) est placée en dessous de la deuxième couche de cristaux liquides (4.2) ou entre la deuxième couche de cristaux liquides (4.2) et la couche gaufrée (2).

4. Fil de sécurité ou élément de fenêtre selon l'une quelconque des revendications 1 à 3, **caractérisé en ce que** la microstructure (6) présente un profil, qui est au moins en partie symétrique par rapport à un plan moyen (M), qui est situé entre le côté avant (V) et le côté arrière (R) et/ou **en ce que** la microstructure (6) présente des premières et des deuxièmes régions (15, 16), dans lequel un profil de la microstructure (6) dans les premières régions (15) est l'inverse du profil de la microstructure (6) dans les deuxièmes régions (16).

5. Fil de sécurité ou élément de fenêtre selon l'une quelconque des revendications 1 à 4, **caractérisé en ce que** la métallisation (7) ou la microstructure (6) est au moins en partie structurée de telle manière que la structuration fournisse un dessin ou un motif reconnaissable à l'oeil nu.

6. Fil de sécurité ou élément de fenêtre selon l'une quelconque des revendications 1 à 5, **caractérisé en ce que** la métallisation (7) est une métallisation en une couche.

7. Fil de sécurité ou élément de fenêtre selon l'une quelconque des revendications 1 à 6, **caractérisé en ce qu'**il est prévu une couche de dispersion de la lumière (17.1; 17.2) au-dessus de la première couche de cristaux liquides (4.1) et/ou en dessous de la deuxième couche de cristaux liquides (4.2).

8. Fil de sécurité ou élément de fenêtre selon l'une quelconque des revendications 1 à 7, **caractérisé en ce que** la microstructure est réalisée sous la forme de microcavités (12), dans lequel les microcavités (12) sont disposées dans une vue en plan sous la forme d'un type de grille bidimensionnelle non orthogonale, en particulier sous la forme d'un type de grille hexagonale.

9. Procédé de fabrication d'un fil de sécurité ou d'un élément de fenêtre pour un objet de valeur, dans lequel on fabrique un corps multicouche avec un côté avant (V) et un côté arrière (R) et on exécute à cet effet les opérations suivantes:
- on prépare une couche transparente (2) et on imprime dans sa surface une microstructure (6),
- on dépose une métallisation (7) au moins sur des parties de la surface de la couche gaufrée (2),
- on dépose sur la surface et au-dessus de la métallisation (7) une couche transparente de couverture (3), qui égalise la microstructure (6),
- on dépose une première couche de cristaux liquides (4.1) au-dessus de la couche de couverture (3),
dans lequel
- on réalise et on configure la microstructure (6) soit sous forme de structure de sous-longueur d'onde (10) soit de microcavités (12), présentant une largeur d'ouverture de 0,5 µm à 3 µm et un rapport d'aspect de 0,5 ou supérieur, de telle manière qu'elle absorbe au moins partiellement la lumière aussi bien par le côté avant (V) que par le côté arrière (R),
**caractérisé en ce qu'**il est prévu sous la couche gaufrée (2) une deuxième couche de cristaux liquides (4.2).

10. Procédé selon la revendication 9, **caractérisé en ce que** l'on place une première feuille de support transparente (5.1) au-dessus de la première couche de cristaux liquides (4.1) ou on place une première feuille de support transparente (5.1) avant la pose de la première couche de cristaux liquides (4.1) sur la couche de couverture (3).

11. Procédé selon une des revendications 9 ou 10, **caractérisé en ce que** l'on place une deuxième feuille de support transparente (5.2) en dessous de la deuxième couche de cristaux liquides (4.2) ou on place une deuxième feuille de support transparente (5.2) en dessous de la couche gaufrée (2) avant la pose de la deuxième couche de cristaux liquides (4.2).

12. Procédé selon l'une quelconque des revendications 9 à 11, **caractérisé en ce que** l'on confère à la microstructure (6) un profil, qui est formé de façon au moins en partie symétrique par rapport à un plan moyen (M), qui est situé entre le côté avant (V) et le côté arrière (R) ou **en ce que** la microstructure (6) est formée avec des premières et des deuxièmes régions (15, 16), qui ont un profil inverse les unes des autres.

13. Procédé selon l'une quelconque des revendications 9 à 12, **caractérisé en ce que** l'on structure au moins en partie la métallisation (7) ou la microstructure (6), de telle manière que l'on fournisse un dessin ou un motif reconnaissable à l'oeil nu, dans lequel on dépose de préférence une métallisation plate et on l'enlève ensuite à nouveau en partie.

14. Procédé selon l'une quelconque des revendications 9 à 13, **caractérisé en ce que** l'on dépose la métallisation (7) sous la forme d'une métallisation en une couche.

15. Procédé selon l'une quelconque des revendications 9 à 14, **caractérisé en ce que** l'on dispose une couche de dispersion de la lumière (17.1; 17.2) au-dessus de la première couche de cristaux liquides (4.1) et/ou en dessous de la deuxième couche de cristaux liquides (4.2).

16. Procédé selon l'une quelconque des revendications 9 à 15, **caractérisé en ce que** l'on réalise la microstructure sous la forme de microcavités, dans lequel les microcavités (12) sont disposées dans une vue en plan sous la forme d'un type de grille bidimensionnelle non orthogonale, en particulier sous la forme d'un type de grille hexagonale.
